# DEMANDE DE BREVET EUROPEEN

(11) **EP 1 672 766 A1**
(43) Date de publication de la demande: **21.06.2006**
(21) Numéro de dépôt: 04405774.3
(22) Date de dépôt: 16.12.2004
(51) Int. Cl.: H02K 1/14, H02K 15/08

(54) **Stator et procede pour la réalisation d'une bobine et moteur obtenu selon ce procede**

(71) Demandeur: ISA FRANCE S.A., 25130 Villers-le-Lac (FR)
(72) Inventeur: Tirole, Nicolas, 25130 Villers-le-Lac (FR)
(74) Mandataire: GLN

(57) **Abrégé**

Afin d'éviter les inconvénients engendrés par les entrefers, l'invention propose un stator (14) pour moteur pas à pas en matériau magnétique doux, ayant la forme d'un cadre qui définit une ouverture centrale, dont un côté, appelé noyau (29), est destiné à porter une bobine, et dont un autre côté est doté d'un logement (30) destiné à recevoir un rotor et qui est défini par des épanouissements polaires. Selon l'invention, ce stator est réalisé en une seule pièce et lesdits épanouissements sont séparés par une fente (32).

## Description

La présente invention se rapporte au domaine des moteurs pas à pas, notamment ceux appelés moteurs Lavet, du nom de leur inventeur. De tels moteurs comportent trois constituants principaux : un rotor, un stator et une bobine. Plus particulièrement, l'invention concerne un stator et des procédés pour la réalisation de la bobine que le stator permet de mettre en oeuvre. L'invention a également pour objet des moteurs obtenus à partir d'un tel stator et par la mise en oeuvre de ces procédés.

De manière générale, le rotor est la partie tournante du moteur. Il est constitué d'un disque en un matériau susceptible d'être fortement aimanté de façon permanente. Il peut avoir un ou plusieurs axes d'aimantation, suivant la conception du moteur.

Le stator est la partie fixe du moteur. Il est, typiquement, réalisé en un alliage de fer-nickel à haute perméabilité (conduction magnétique) et assure le bouclage du circuit magnétique. Le stator est interrompu pour former des épanouissements polaires définissant un logement dans lequel est engagé le rotor, forçant ainsi le flux magnétique à passer par celui-ci.

La bobine est constituée de l'enroulement d'un fil conducteur électrique, disposé sur une partie du stator appelée noyau. Elle a pour fonction, lorsqu'elle est mise sous tension, de créer un champ magnétique dans le stator qui assure ainsi la fonction d'un électro-aimant, dont la polarité va dépendre du sens du courant circulant dans la bobine.

L'une des difficultés rencontrées dans la fabrication d'un moteur pas à pas est la réalisation du bobinage. Pour faciliter cette étape, le stator est généralement formé de deux pièces distinctes, l'une portant la bobine et l'autre dotée d'une ouverture formant les épanouissements polaires. Ces deux parties sont réunies par des entrefers.

Or, la présence de ces entrefers augmente la réluctance du circuit magnétique dans le stator et réduit en conséquence le rendement du moteur. De plus, cette structure fournit un stator d'épaisseur relativement importante, ce qui peut être gênant dans certaines applications, notamment horlogères où la taille des composants est toujours un facteur clé. Par ailleurs, des éléments parasites tels que des poussières peuvent s'insérer entre les parties du stator et ainsi engendrer des dysfonctionnements.

Une solution à ce problème est de réaliser un stator en une seule pièce. Il est alors difficile d'enrouler le fil électrique formant la bobine. Le document JP 56141766 décrit, à cet effet, une coque cylindrique en deux parties, disposée sur le noyau également de forme cylindrique et sur lequel elle peut être entraînée en rotation. La bobine est alors réalisée en enroulant un fil sur la coque.

Bien qu'intéressante, la solution ci-dessus n'est pas satisfaisante, car elle nécessite que le stator présente une portion cylindrique pour pouvoir y faire tourner la coque, sans quoi les conditions de frottement de la coque sur le stator sont très défavorables. Il est particulièrement contraignant d'avoir à adapter le stator pour qu'il présente un noyau cylindrique. Dans le document japonais déjà cité, le stator est coupé dans son épaisseur en deux parties symétriques, chacune formant la moitié du cylindre du noyau. On comprend que la réalisation d'un tel stator est délicate à mettre en oeuvre, notamment dans des applications en micromécanique.

La présente invention a pour but de proposer un stator constitué d'une seule pièce permettant de réaliser facilement le bobinage d'un moteur pas à pas.

De façon plus précise, l'invention concerne un stator pour moteur pas à pas en matériau magnétique doux. Il a la forme d'un cadre qui définit une ouverture centrale. Un premier côté du cadre, appelé noyau, est destiné à porter une bobine. Un deuxième côté du cadre est défini par des épanouissements polaires et est doté d'un logement destiné à recevoir un rotor. Selon l'invention, le stator est réalisé en une seule pièce et les épanouissements sont séparés par une fente.

Dans une première variante, la fente traverse le côté opposé au noyau et est orientée selon une direction perpendiculaire à ce noyau. Les dimensions de l'ouverture centrale sont appelées A dans le sens du noyau et B dans l'autre direction. Avantageusement, B est supérieur ou égal à A/2.

L'invention concerne également un procédé pour le bobinage d'un moteur pas à pas, à partir d'un tel stator. Il comporte les étapes suivantes :
- se doter d'un dispositif comprenant :
   o un châssis,
   o un organe de préhension monté sur ce châssis mobile en rotation autour d'un axe AA, et
   o une filière comportant des moyens de guidage d'un fil et formée d'une tige d'axe longitudinal BB perpendiculaire à AA, montée pivotante autour de BB sur le châssis par l'une de ses extrémités, l'extrémité libre étant dotée d'une tête dont la plus grande distance entre l'axe BB et l'une de ses extrémités est appelée l.
- se doter du stator évoqué ci-dessus, dans lequel A est supérieur à la projection sur l'axe AA de la distance parcourue par ladite extrémité de la tête et B est supérieure à l,
- monter ce stator sur l'organe de préhension de manière à ce que la fente soit alignée avec l'axe BB et que le noyau soit parallèle à l'axe AA,
- fixer un fil conducteur sortant de la filière sur ledit noyau, et
- mettre en rotation le stator autour de AA et la filière autour de BB selon un mouvement périodique circulaire ou d'oscillation, pour bobiner le fil sur le noyau.

Dans une deuxième variante, le stator comporte une fente qui traverse l'un des côtés adjacents au noyau et est orientée selon une direction parallèle à ce noyau.

Pour bobiner un moteur pas à pas à partir d'un tel stator, l'invention propose un procédé caractérisé en ce qu'il comporte les étapes suivantes :
- se doter d'un dispositif comprenant :
   o un châssis,
   o un organe de préhension monté sur le châssis mobile en rotation autour d'un axe AA, et
   o une filière comportant des moyens de guidage d'un fil et formée d'une tige d'axe longitudinal BB parallèle à AA, montée mobile en translation selon BB sur ledit châssis par l'une de ses extrémités, l'extrémité libre étant dotée d'une tête,
- se doter du stator évoqué dans le deuxième variante ci-dessus,
- monter le stator sur l'organe de préhension de manière à ce que la fente soit alignée avec l'axe BB,
- fixer un fil conducteur sortant de la filière sur ledit noyau,
- mettre le stator en rotation autour de AA, et
- mettre la filière en translation selon BB, selon un mouvement périodique de va-et-vient, pour bobiner le fil sur le noyau.

L'invention concerne également un moteur pas à pas comprenant un stator, un rotor et une bobine, obtenu par la mise en oeuvre de l'un des procédés ci-dessus.

D'autres détails apparaîtront plus clairement à la lecture de la description qui suit, faite en référence au dessin annexé, dans lequel :
- la figure 1 illustre le dispositif utilisé pour réaliser une bobine,
- la figure 2 représente un stator selon l'invention, adapté pour la mise en oeuvre du procédé,
- les figures 3 à 5 représentent plusieurs phases du procédé de réalisation d'une bobine,
- la figure 6 montre un moteur obtenu selon ce procédé, et
- la figure 7 illustre une variante du procédé selon l'invention.

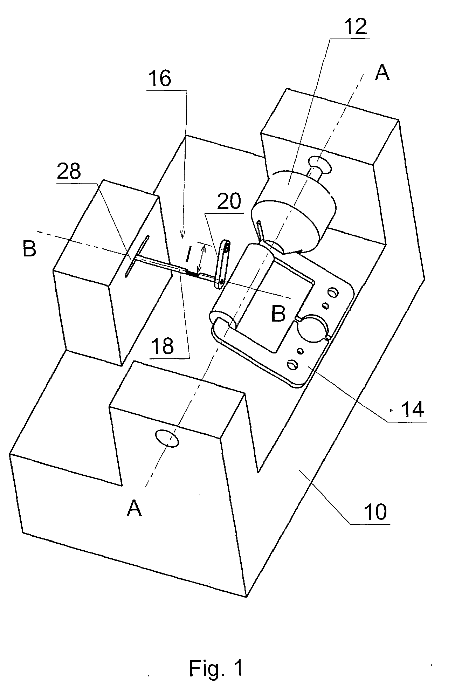

On a représenté, sur la figure 1, un dispositif permettant de réaliser classiquement le bobinage d'un moteur pas à pas. Ce dispositif comporte un châssis 10 et un organe de préhension 12 monté sur le châssis 10 et destiné à maintenir un stator 14 d'un moteur pas à pas. L'organe 12 est monté mobile en rotation autour d'un axe AA et est entraîné par un moteur pour faire pivoter le stator 14 autour de cet axe. L'organe 12 est, par exemple, constitué d'une pince articulée, pilotée automatiquement par une commande numérique.

Le dispositif comporte également une filière 16 formée, par exemple, d'une tige 18 d'axe longitudinal BB. Par l'une de ses extrémités, elle est montée pivotante autour de BB sur le châssis 10. Son extrémité libre est dotée d'une tête 20 plane, disposée orthogonalement à BB. A titre d'illustration, les dessins représentent une tige creuse 18 à l'intérieur de laquelle passe le fil et une tête de forme allongée, la tige 18 traversant la tête 20 à une première de ses extrémités 20a.

Classiquement, une buse 26 est située aux environs de la deuxième extrémité 20b de la tête. Elle sert à guider le fil qui arrive de la tige 18, lorsqu'il s'enroule sur le noyau. On appellera l la distance entre les deux extrémités 20a et 20b de la tête.

Le plan dans lequel la tête 20 s'inscrit est parallèle à l'axe AA. Les axes de rotation du stator AA et de la tige BB se coupent perpendiculairement mais, sans que la tige 18 traverse l'axe AA, et la distance entre la tête 20 et l'axe AA est plus grande que l'épaisseur de la bobine que l'on souhaite obtenir.

Avantageusement, la position de la tige 18 selon l'axe AA est ajustable. L'homme du métier pourra choisir la solution qu'il préfère pour réaliser cette caractéristique. La tige 18 peut être fixée sur un chariot coulissant dans une gorge 28 ménagée dans le châssis, parallèlement à l'axe AA.

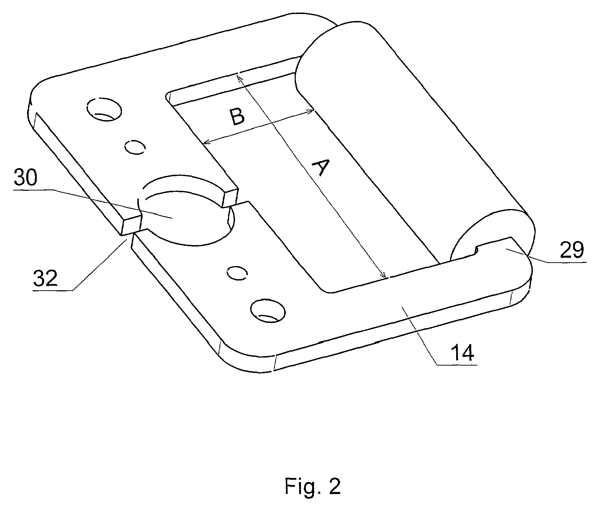

Le dispositif décrit ci-dessus peut être utilisé pour bobiner un stator 14 en une seule pièce, tel celui illustré sur la figure 2. Il présente une forme quadrangulaire définissant une ouverture centrale. Le côté du stator destiné à porter la bobine en constitue son noyau 29. On nommera les dimensions de l'ouverture centrale A dans le sens du noyau et B dans l'autre direction.

Sur le côté opposé au noyau 29, un logement 30, destiné à recevoir un rotor, est défini par des épanouissements polaires dont la forme a été choisie classiquement par l'homme du métier. Les épanouissements sont séparés par une fente 32. Cette dernière est alignée selon une direction perpendiculaire au noyau 29. Elle est réalisée à l'endroit où les parois sont les plus fines. La largeur de la fente 32 est supérieure au diamètre de la tige.

Selon une caractéristique importante de l'invention, le stator 14 est réalisé en une seule pièce, ce qui permet de diminuer les perturbations du champ magnétique induit et d'augmenter ainsi le rendement tout en réduisant le coût de fabrication.

Pour que le fil puisse être enroulé sur le noyau 29 au moyen du dispositif de la figure 1, il est nécessaire que le stator puisse tourner librement, sans risque d'accrochage avec la tête 20 qui doit se trouver à l'intérieur de l'ouverture. Cela implique des contraintes dimensionnelles au niveau du stator.

Comme on le comprendra ci-après, la longueur A doit être supérieure à la projection sur l'axe AA de la distance parcourue par la deuxième extrémité de la tête. Cette dernière est au maximum de 2l. Donc, si A est supérieure à 2l, cette solution permet d'appréhender toutes les solutions choisies pour le réglage du mouvement de la tête. La longueur B, quant à elle, doit être supérieure à l. Si on s'affranchit mathématiquement de la dimension l, les dimensions du stator sont caractérisées par B ≥ A/2.

Pour assurer le bobinage, le stator 14 est monté sur l'organe de préhension 12, le noyau 29 étant orienté parallèlement à l'axe AA. La position de la tige 18 de la filière 16 est ajustée de manière à ce que le l'axe BB soit aligné avec la direction des fentes. Ainsi, lorsque l'on fait tourner le stator 14 autour de l'axe AA, son noyau 19 étant aligné sur cet axe, cette rotation n'est pas entravée par le dispositif puisque la tige 18 passe dans la fente et la tête 20 dispose de suffisamment d'espace dans l'ouverture centrale pour qu'elle ne risque pas de rencontrer le stator, quelles que soient leurs positions relatives.

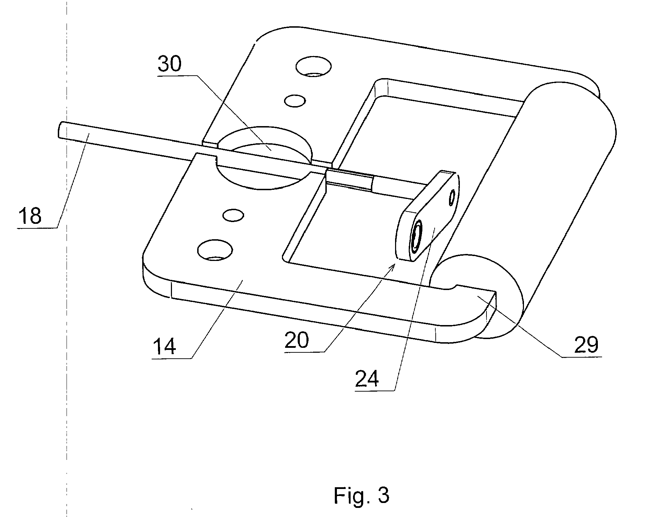

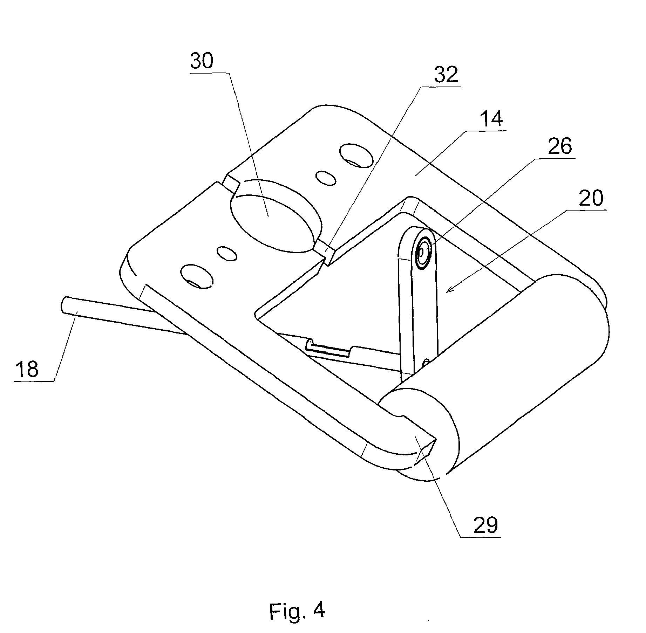

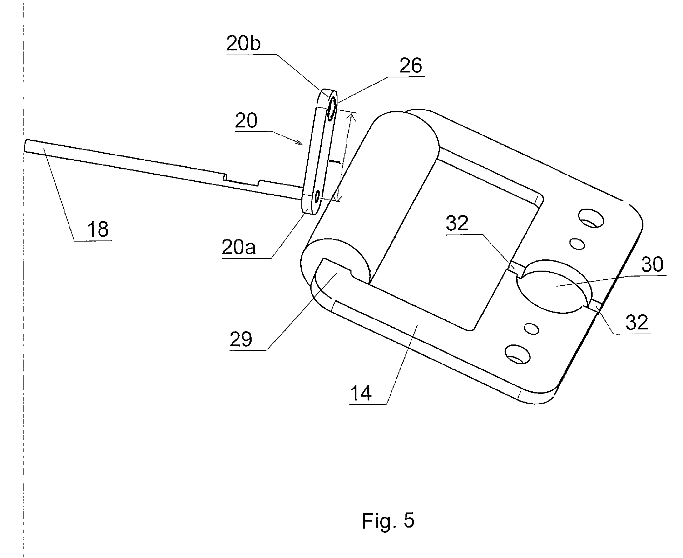

Les figures 3 à 5 montrent différentes positions du stator et de la filière au cours du bobinage. Un fil métallique sortant de la filière 16 par la buse 26 est fixé par un moyen connu sur le noyau 29, généralement par collage. Puis, tandis que le stator 14 est mis en rotation autour de AA, la filière 16 est animée d'un mouvement périodique d'oscillation du type essuie-glace ou circulaire, autour de l'axe BB. L'angle parcouru par la deuxième extrémité 20b de la tête de la filière 16 permet à cette extrémité de balayer toute la longueur du noyau 29.

De la sorte, le fil s'enroule progressivement autour du noyau 29 et la bobine se forme. Le rapport entre les vitesses de rotation du stator 14 et de balayage de la filière 16 est tout à fait similaire à celui choisi pour ce genre d'opération.

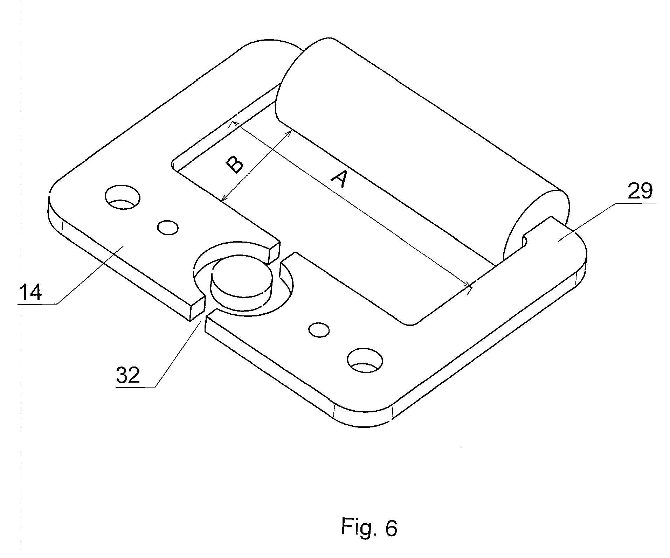

Le stator 14 ainsi équipé de sa bobine peut recevoir un rotor pour former un moteur illustré sur la figure 6, présentant des caractéristiques structurelles particulières, puisqu'il ne comporte pas d'entrefer, sinon entre les épanouissement polaires, du fait que son stator 14 est formé d'une seule pièce.

Les dimensions du moteur obtenu dépendent de la longueur l de la tête de la filière. On a B>l et A≤2l. Si on s'affranchit de la dimension l, le moteur est caractérisé par B ≥ A/2.

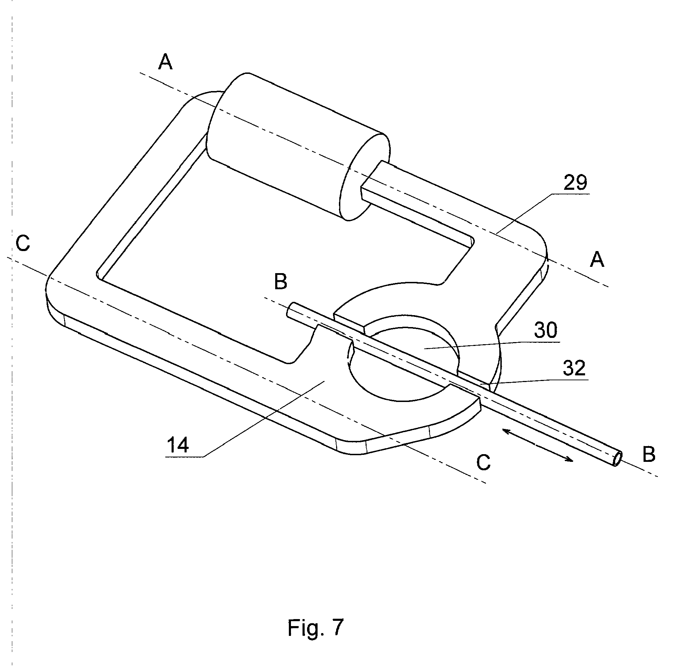

On notera que le logement 30 et la fente 32 peuvent prendre une position quelconque sur l'un des côtés du stator autre que le noyau. Dans une variante, le logement 30 et la fente 32 sont disposés sur un des côtés adjacents au noyau 29. Le dispositif de bobinage doit alors être adapté, comme l'illustre la figure 7. La tige de la filière est disposée selon un axe BB, sensiblement parallèle au noyau 29 et donc à l'axe AA. Dans ce cas, la tête de la filière 20 peut se trouver dans le prolongement de la tige 18 et comporte une buse 26 dont le trou est fortement arrondi, pour que le fil se présente favorablement par rapport au noyau.

Dans ce cas, la filière 16 est animée, non pas d'un mouvement de rotation, mais d'un mouvement de translation en va-et-vient dans l'ouverture centrale du stator 14, selon l'axe BB, tandis que le stator est entraînée en rotation autour de AA, comme dans la première variante. Le fil s'enroule autour du noyau 29 et la bobine se forme progressivement.

Ainsi est obtenu un moteur dont le stator 14 est en une seule pièce, ce qui en réduit le coût tout en améliorant son rendement. De plus, son épaisseur est réduite par rapport aux moteurs habituellement utilisés, ce qui permet une utilisation plus aisée dans les applications micromécaniques.

On relèvera que dans les deux exemples donnés, la bobine est disposée sur un seul côté du stator. Il est évident qu'en faisant appel au dispositif décrit en référence à la figure 7, il est possible de disposer deux bobines sur un même stator, dans la mesure où celui-ci comporte deux côtés parallèles à l'axe AA. Il suffit de déplacer le stator à la fin de l'opération de bobinage de la première bobine, de manière à ce que le second noyau tourne sur l'axe CC et assure le bobinage de la deuxième bobine.

Il est même possible de réaliser des bobines sur les trois cotés autres que celui dans lequel se trouve le logement du rotor, en utilisant une tête telle que celle dont est muni le dispositif de la figure 1, complétée d'une commande permettant également un mouvement de translation, tel que présenté dans la variante ci-dessus.

La précédente description n'a été donnée qu'à titre d'exemple non limitatif et présente un stator et un dispositif particulièrement adaptés à la mise en oeuvre du procédé selon l'invention. Mais ils peuvent être modulés tout en permettant la rotation du stator sans risque de heurt avec la filière. Par exemple, la tête peut ne pas être orientée perpendiculairement à la tige ou elle peut être de forme circulaire.

## Revendications

1. Stator (14) pour moteur pas à pas en matériau magnétique doux, ayant la forme d'un cadre qui définit une ouverture centrale, dont un côté, appelé noyau (29), est destiné à porter une bobine, et dont un autre côté est doté d'un logement (30) destiné à recevoir un rotor et qui est défini par des épanouissements polaires, **caractérisé en ce qu'**il est réalisé en une seule pièce et **en ce que** lesdits épanouissements sont séparés par une fente (32).

2. Stator selon la revendication 1, **caractérisé en ce que** ladite fente (32) traverse le côté opposé audit noyau (29) et est orientée selon une direction perpendiculaire audit noyau (29).

3. Stator selon la revendication 2, dont les dimensions de l'ouverture centrale dudit stator (14) sont appelées A dans le sens du noyau (29) et B dans l'autre direction, **caractérisé en ce que** B est supérieur ou égal à A/2.

4. Stator selon la revendication 1, **caractérisé en ce que** ladite fente (32) traverse l'un des côtés adjacents audit noyau (29) et est orientée selon une direction parallèle audit noyau (29).

5. Procédé pour le bobinage d'un moteur pas à pas, **caractérisé en ce qu'**il comporte les étapes suivantes :
- se doter d'un dispositif comprenant :
o un châssis (10),
o un organe de préhension (12) monté sur ledit châssis (10) mobile en rotation autour d'un axe AA, et
o une filière (16) comportant des moyens de guidage d'un fil et formée d'une tige (18) d'axe longitudinal BB perpendiculaire à AA, montée pivotante autour de BB sur ledit châssis (10) par l'une de ses extrémités, l'extrémité libre étant dotée d'une tête (20) dont la plus grande distance entre l'axe BB et l'une de ses extrémités est appelée l,
- se doter d'un stator (14) selon la revendication 3 dans lequel A est supérieur à la projection sur l'axe AA de la distance parcourue par ladite extrémité de la tête et B est supérieure à l,
- monter ledit stator (14) sur ledit organe de préhension (12) de manière à ce que ladite fente (32) soit alignée avec ledit axe BB et que le noyau (29) soit parallèle à l'axe AA,
- fixer un fil conducteur sortant de la filière sur ledit noyau (29), et
- mettre en rotation le stator (14) autour de AA et la filière autour de BB selon un mouvement périodique circulaire ou d'oscillation, pour bobiner le fil sur le noyau (29).

6. Procédé selon la revendication 4, **caractérisé en ce que** l'angle parcouru par l'extrémité de la tête (20) lui permet de balayer toute la longueur du noyau (29).

7. Moteur pas à pas comprenant un stator (14), un rotor et une bobine, **caractérisé en ce qu'**il est obtenu par le procédé selon l'une des revendications 5 à 6.

8. Procédé pour le bobinage d'un moteur pas à pas, **caractérisé en ce qu'**il comporte les étapes suivantes :
- se doter d'un dispositif comprenant :
o un châssis (10),
o un organe de préhension (12) monté sur ledit châssis (10) mobile en rotation autour d'un axe AA, et
o une filière (16) comportant des moyens de guidage d'un fil et formée d'une tige d'axe longitudinal BB parallèle à AA, montée mobile en translation selon BB sur ledit châssis (10) par l'une de ses extrémités, l'extrémité libre étant dotée d'une tête,
- se doter d'un stator (14) selon la revendication 4,
- monter ledit stator sur ledit organe de préhension de manière à ce que ladite fente (32) est alignée avec ledit axe BB,
- fixer un fil conducteur sortant de la filière sur ledit noyau (29),
- mettre le stator (14) en rotation autour de AA, et
- mettre la filière en translation selon BB, selon un mouvement périodique de va-et-vient, pour bobiner le fil sur le noyau.

9. Moteur pas à pas comprenant un stator (14), un rotor logé dans ledit logement (30) et une bobine, **caractérisé en ce qu'**il est obtenu par le procédé selon la revendication 8.
